# EUROPEAN PATENT APPLICATION

(11) **EP 3 375 505 A1**
(43) Date of publication of application: **19.09.2018**
(21) Application number: 18161700.2
(22) Date of filing: 14.03.2018
(51) Int. Cl.: B01D 19/00

(54) **DEGASSING APPARATUS**

(30) Priority: 15.03.2017 IT 201700028854 U
(71) Applicant: Cannon S.p.A., 20121 Milan (IT)
(72) Inventor: VOLPATO, Marco, 20121 Milan (IT); BONANSEA, Alberto, 20121 Milan (IT)
(74) Representative: Candito, Rocco

(57) **Abstract**

An apparatus for continuous degassing of a chemical component (2) intended for forming a reactive resin for producing, in particular, wind blades, comprises a degassing column (3) having a bounding wall (4) that defines a degassing volume (V), traversable by the chemical component (2), in which a certain degree of vacuum is created. In the degassing volume (V) a series of lamina elements (5) is stacked that is arranged for receiving the chemical component (2) on respective receiving surfaces (SA, SB) to distribute the chemical component (2) by forming thin coats thereof that promote the release of gas by the chemical component (2). The lamina elements (SA, SB) comprise pairs of opposite tapered elements (5A,5B) that are obtained from sheet metal shaped plastically by rolling and are shaped to advance by gravity the chemical component (2) according to a path (P) with alternating corners that extends from top to bottom. Level sensor means is provided for controlling respectively: an accumulating level (L1) of the chemical component on the bottom of the column (3) (to regulate the removal flowrate from the bottom); an accumulating level (L2) on the container (11) for entry to the stack of tapered plates (5A, 5B) (for adjusting the entry flowrate to the column (3)); a safety accumulating level (L3) of the quantity of chemical component (2) that accumulates in the inlet container (11). The bounding wall (4) is transparent to permit visual control from the exterior of the advancement and accumulation status of the chemical component (2).

## Description

### BACKGROUND OF THE INVENTION

The invention relates to an apparatus for degassing a reactive chemical component, which is particularly suitable for being used in systems for impregnating structures of wind blades or other resin objects.

### PRIOR ART

Different systems are known currently for degassing chemical substances used in processes for making coatings or for producing objects for impregnation or infusion of resins. The chemical substances that need to be degassed can comprise polyol, isocyanate, epoxy resins and hardeners thereof, various other chemical agents, etc...

The process of degassing reactive chemical components is currently achieved directly inside the tank or other container which is, each time, used to contain the resins intended for the moulding process. For this purpose, systems are used to generate thin layers of chemical component so as to expose the latter to the underlying vacuum environment to promote the separation and removal therefrom of the gases contained in the chemical component. A pump is provided that recirculates the component to be degassed from the bottom to the top of the tank, from where the component falls onto a rotating disc or onto stationary bored plate elements, generating on the latter ample exchange surfaces for exchange with the volume in a vacuum, promoting extraction of the gas.

The aforesaid degassing process cannot be considered to be continuous or of the so-called in line type, as the liquid chemical component first needs to be recirculated a certain number of times before being sent to a machine for moulding the desired articles.

The known systems that operate in batch mode provide for a set quantity, for example 500 litres, of chemical component being recirculated in vacuum conditions by a pump in a suitable tank where, by interacting with the aforesaid plates or disks, the dissolved gases are separated and extracted. The drawback of the systems that operate by batch is the fact that all or a large part of the quantity has to be degassed that is necessary for performing the infusion before being able to proceed with the infusion operation or, alternatively, a specific system section is required in which to perform degassing by batch to then transfer the entire degassed quantity to the container that feeds the infusion operation. Accordingly, in this manner, use of the chemical material and of the plant is not optimized and, at the end of a moulding process, a certain degassed quantity can remain and be located both in the dispensing section and in the degassing section.

Another known system involves the use of degassing membranes of osmotic type based on polymers that are permeable to gases but are unfortunately unsatisfactory from the point of view of reliability and duration of operating life.

### OBJECTS OF THE INVENTION

One object of the present invention is to improve current apparatuses for degassing chemical components, providing an apparatus for in-line degassing of a chemical component that is particularly effective, essential in the components and convenient and versatile to use.

In particular, one object is to provide an apparatus that is able to ensure instantaneously during in-line dosing and continuous consumption the quantity of chemical component that is dosed and effectively degassed that instant by instant and with continuity is required in a cycle of moulding by impregnation of an object, such as, in a non-limiting manner, a wind blade.

### SHORT DESCRIPTION OF THE INVENTION

The above is achieved by an apparatus for continuous degassing of a reactive chemical component intended for the formation of a hardening resin for the manufacture, in particular, of wind blades, comprising:
- a degassing column having a bounding wall that defines a degassing volume, traversable by said chemical component, in which a certain degree of vacuum is created,
- a series of lamina elements placed above one another along a vertical axis in said degassing volume and shaped for receiving said chemical component on respective receiving surfaces to distribute the chemical component, forming thin coats thereof so as to promote the release of gas by said chemical component, said lamina elements being shaped for advancing by gravity said chemical component from an lamina element to the underlying according to a path with alternating corners that extends from top to bottom,
CHARACTERIZED IN THAT level sensor means is provided for controlling respectively
- a first accumulation level of the chemical component on the bottom of the degassing column to regulate the removal flowrate from the bottom,
- a second accumulating level in an inlet container upstream of said series of lamina elements, for adjusting the entry flowrate to the column,
- a third safety level of the quantity of chemical component that accumulates on said inlet container; CHARACTERIZED IN THAT said bounding wall can be transparent to permit visual control from the exterior of the advancement status of the release of the gas in the form of bubbles and of accumulation of the chemical component, and CHARACTERIZED IN THAT said lamina elements comprise pairs of opposite tapered elements obtained from sheet metal shaped plastically by rolling.

### SHORT DESCRIPTION OF THE DRAWINGS

The apparatus according to the present invention, and the innovative features thereof, will be disclosed below with reference for example to the attached drawings, in which:

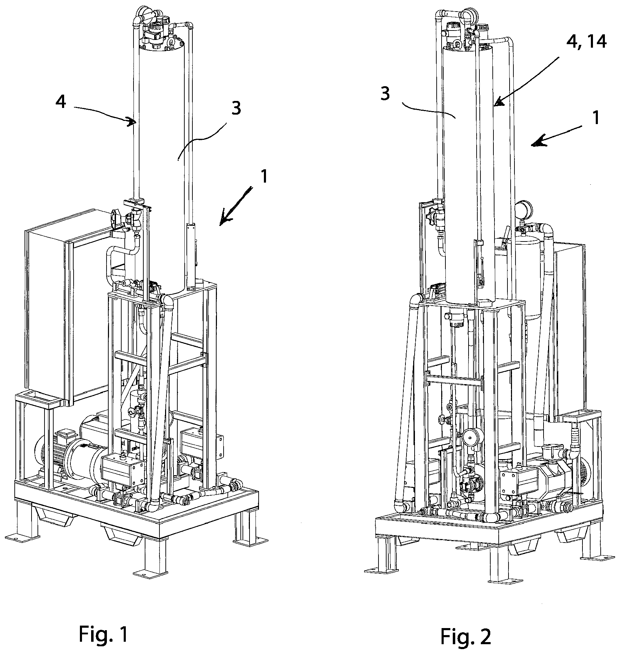

Figures 1 and 2 are two different perspective views of a degassing apparatus, in which a degassing column according to the present invention is visible;

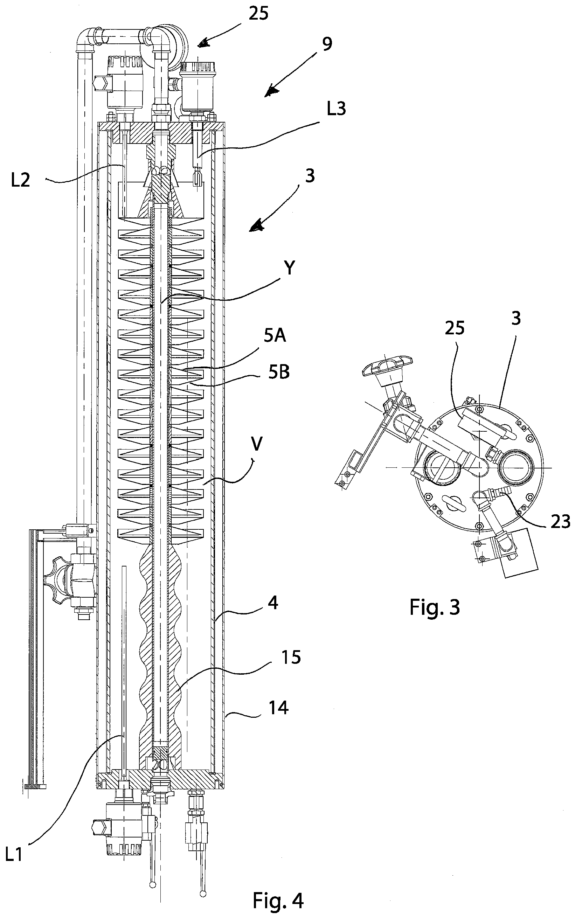

Figure 3 is a top view of the column of the apparatus;
Figure 4 is a vertical longitudinal section of the degassing column;

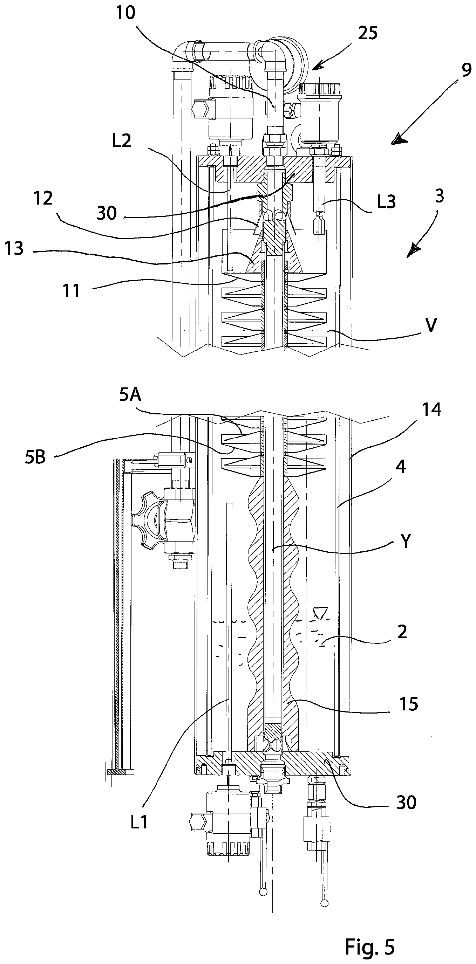

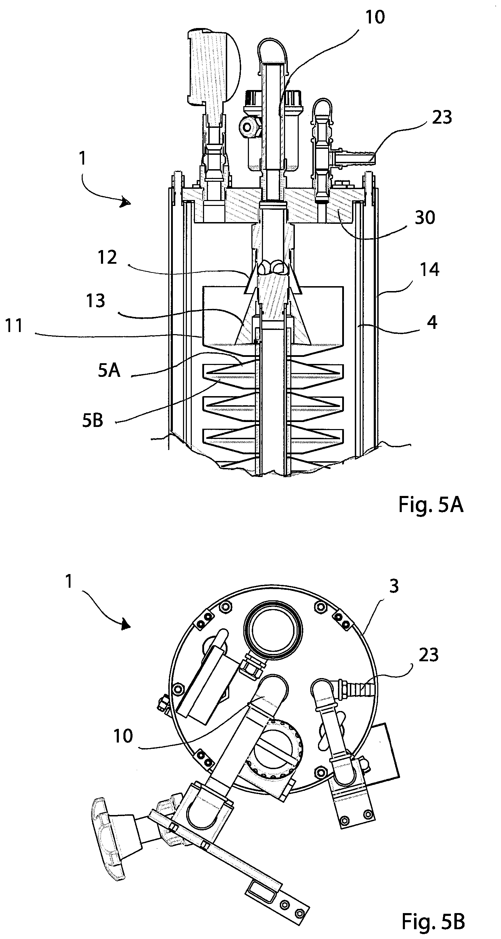

Figure 5 is an enlarged fragmentary view that shows part of the degassing column of Figure 4;

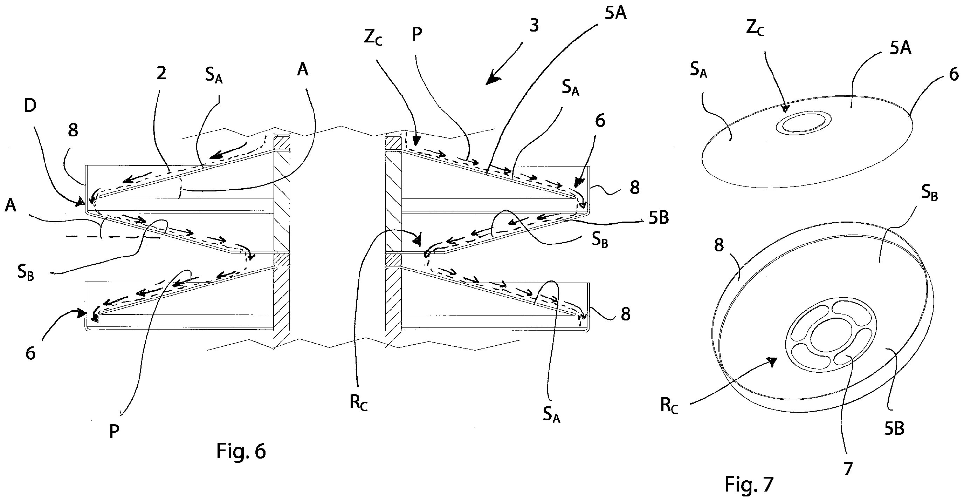

Figure 6 is an enlarged section view of a portion inside the degassing column;
Figure 7 shows two of the lamina elements that make up parts inside the degassing column;

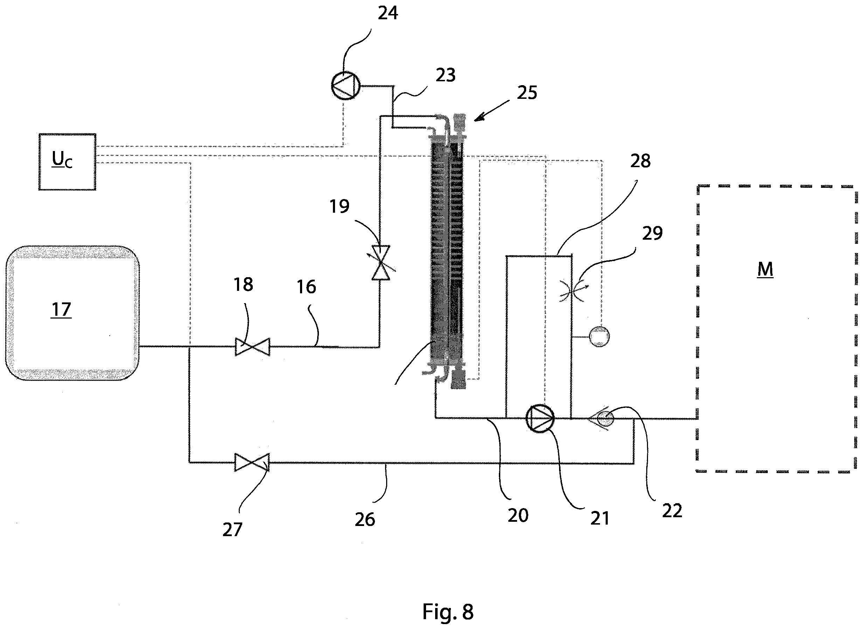

Figure 8 is a plant diagram that constitutes an in-line degassing apparatus according to the present invention in which the degassing column of the preceding figures is visible.

### DETAILED DESCRIPTION OF THE INVENTION

The general features of the present invention will be illustrated below through a non-limiting exemplary embodiment.

With reference to the enclosed drawings, an apparatus 1 is disclosed for degassing a chemical component 2, in particular a hardening agent 2 for forming epoxy reactive resin intended for the infusion of wind blades. The apparatus 1 comprises a degassing column 3 that is now disclosed in greater detail.

The degassing column 3 extends along a vertical axis Y and comprises a bounding wall 4 that defines, internally, a degassing volume V that is suitable for being traversed by said chemical component 2, and in which a certain degree of vacuum is created.

The desired vacuum conditions are achieved by a conduit 23 that leads away from an upper zone of the degassing column 3 and which is connected to a suction pump 24 for the vacuum. A gauge 25 is provided to measure and monitor pressure in the degassing column 3.

The bounding wall 4 can be transparent to permit visual control from the exterior of the advancement and accumulation status of the chemical component 2 inside the degassing volume V. The bounding wall 4 is of cylindrical shape and is made of transparent glass or stainless steel. An outer transparent safely liner 14 is provided that is additional to the bounding wall 4. The outer safety liner 14 prevents, in the case of breakage of the bounding wall 4, jets of chemical component 2 contained in the column 3 escaping outside. Suitable seal flanges 30 provided at the ends of the degassing column 3 ensure the complete airtightness of the degassing volume V.

Inside the bounding wall 4, a series is housed of lamina elements 5 stacked on one another along the vertical axis Y in the degassing volume V. The lamina elements 5 are shaped for receiving the chemical component 2 on respective receiving surfaces S_{A}, S_{B} to distribute the chemical component 2 so as to form thin coats that flow downwards, passing from one element to the next placed below and that, owing to the wide exchange surface that is formed, promote the release of gas by the chemical component 2 inside the volume V under a vacuum.

The geometric shape and reciprocal arrangement of the lamina elements 5 is such as to make the chemical component 2 advance by gravity according to a path P with alternating corners that extends from top to bottom. The lamina elements 5 comprise pairs of opposite tapered elements 5A, 5B, obtained from sheet metal, in particular di stainless steel, shaped plastically by rolling. More precisely, to make such opposite tapered elements 5A, 5B a metal sheet of reduced thickness is started with that is blanked to obtain disc-shaped semifinished products that, once they have been fitted to the spindles of a lathe, are rotated. Motor-driven presser rollers exert pressure on the rotating disc-shaped semifinished products to deform the semifinished products plastically progressively, stretching the semifinished products against a contrasting surface of desired shape, until the same geometric shape is formed.

The lamina elements in particular comprise pairs of tapered elements 5A, 5B arranged vertically in succession, one above the other, to cause the formation of sequential coats that expose the chemical component 2 to the surrounding vacuum, promoting the separation and removal of the gases contained therein.

Each pair of tapered elements comprises a widening tapered element 5A with a concavity facing downwards, opposite an underlying collecting tapered element 5B, having concavity facing upwards.

The widening tapered element 5A is shaped for receiving, on a central zone Z_{C} thereof, a flow of the chemical component 2 coming from an upper zone, to subsequently expand the flow to a peripheral edge 6 thereof.

The collecting tapered element 5B receives the coat of chemical component that falls from the widening tapered element 5A facing and located immediately above the collecting tapered element 5B, and conveys this coat to a central region R_{C} thereof.

In the central region R_{C} of each collecting tapered element 5B transit openings 7 are obtained to enable the coat to advance to an underlying pair of opposite tapered elements 5A, 5B.

Each collecting tapered element 5B is provided on the perimeter with a portion of tapered wall 8 that protrudes upwards with a height that is suitable for preventing the exit by overflowing of the coat of the chemical component 2 that falls from the periphery of the element 5A. The surfaces of the two tapered elements 5A, 5B are tilted, with respect to a horizontal plane, by an angle A that is suitable for enabling the chemical component 2 to slide at a suitable speed. The aforesaid angle can be comprised between 5 and 25 degrees with respect to a horizontal plane. The distance D between the peripheral edge 6 of an enlarging element 5A and the surface S_{B} of the collecting element 5B placed immediately below can vary from 2 to 10 mm and, in particular, is about 4-5 mm.

In an upper part 9 of the degassing column 3, a central tubular delivery conduit 10 is provided for the chemical component 2, an inlet container 11 for entering and conveying to the centre of the stack of underlying tapered lamina elements 5A, 5B. A first hollow taper 12 and a second full taper 13 for conveying the chemical component 2 to the inlet container 11 without dripping are provided.

Inside the degassing column 3, a shaped corrugated or tapered profile 15 is provided for preventing the chemical component 2 from forming cascades, maintaining a surface coat even in the lower part near the outlet from the degassing column 3.

The degassing column 3 is provided with several level sensors for the chemical component 2. More precisely, a sensor L1 is provided for measuring the accumulating level of the chemical component 2 on the bottom of the degassing column 3 in order to regulate automatically the take-up flowrate, i.e. the rate of removal of the component 2 from the bottom by the pump 21 of the apparatus 1.

The sensor L1, for example of capacitive type, which protrudes from the bottom of the column 3 to the top for a certain length, is used to monitor and ensure that an appropriate operating level of the component 2 is maintained by the pump 21, which normally dispenses an excess flowrate with respect to the flowrate required by the dosing unit M. The excess flowrate is recirculated to the pressure control line 28. A level sensor L2 is provided for monitoring and detecting the accumulating level of the quantity of chemical component 2 that accumulates on the inlet container 11 for the stack of tapered elements 5A, 5B; owing to the detection of this level, automatic adjustment is possible, by the shutter valve 19, of the entry flowrate to the column 2. Further, a further safety level sensor L3 is provided that, if a maximum acceptable level reached by the chemical component 2 in the inlet container 11 is detected, stops the supply of the latter to the column 3. In other words, the sensor L3, designed to read a "super-maximum" level, prevents a situation of excessive filling being reached with uncontrolled overflow of the component 2 from the degassing column 3.

For supplying the chemical component 2 to the degassing column 3, a first removal line 16 is provided. The removal line 16 connects an IBC (Intermediate bulk container) tank 17 to the top of the degassing column 3. Along the first line 16 there is a feed valve 18 and a flow pinch control and shutter valve 19 of peristaltic type, by which the flowrate is regulated of the chemical component 2 to the degassing column 3, on the basis of the signals supplied by the aforesaid sensors L1, L2, L3, connected operationally to a control unit Uc, designed to control all the components of the apparatus 1. A second line 20 is provided that is fitted with a feed pump 21 and, further downstream, with a nonreturn valve 22, to remove the chemical component 2 from the base of the degassing column 3, and send the chemical component 2 to a mixing and dosing machine M used to produce wind blades or other desired objects. The pump 21 normally dispenses an excess flowrate with respect to what is requested by the dosing unit M. The excess flowrate is recirculated to the pressure control line 28.

The apparatus 1 comprises a bypass circuit 26 of the degasser, provided with an on-off valve 27 and 18 that leads away from the first line 16 - upstream of the aforesaid feed valve 18, until it joins up with the second line 20, in a point downstream of the feed pump 21 and of the aforesaid nonreturn valve 22.

If a problem should arise in the degassing column 3, the flow through the first removal line 16 is arrested and at this point the bypass 26 of the degasser intervenes, which in an emergency supplies the dosing-mixing machine M directly, thus avoiding an undesired and financially penalizing interruption of the process of moulding the wind blade or another object.

The apparatus 1 comprises a recirculating circuit 28 that starts from a first point of the second line 20 located downstream of the feed pump 21 and reaches a second point of the second line 20 located upstream of the feed pump 21. Along the recirculating circuit 28 a regulating valve 29 is provided for adjusting the delivery pressure of the pump 21 by throttling the recirculating line arranged for ensuring desired pressure values of the component 2 downstream of the feed pump 21. Essentially, the throttling valve 29, suitably controlled by the control unit Uc, acts by throttling more or less the circuit 28, ensures correct supply pressure of the component 2 to the dosing-mixing machine M. Various special stopcocks, or closing devices in general, are distributed suitably at various points of the lines of the apparatus 1 disclosed above to cut off if necessary the various circuits.

The apparatus 1 comprises a support frame that supports the degassing column 3 and receives the other components discussed above in a compact volume.

From what has been said and shown, it is clear that an improved, effective, versatile degassing apparatus has been provided that is able to achieve the objects indicated.

What has been said and shown with reference to the attached drawings has been given merely by way of non-limiting example and which is illustrative of the general features of the utility model, and of a preferred embodiment thereof. It is possible to configure and scale the apparatus 1 in a desired manner according to the particular applications. Lastly, the materials used can be chosen according to need, provided that they are suitable for the specific use for which they are intended.

To sum up, other modifications and variations can be made to the entire apparatus or parts thereof, without falling outside the scope of the claims.

## Claims

1. Apparatus for continuous or in-line degassing of a reactive chemical component (2) intended for the formation of a hardening resin for the manufacture, in particular, of wind blades, comprising:
- a degassing column (3) having a bounding wall (4) that defines a degassing volume (V), which is traversable by said chemical component (2), in which a certain degree of vacuum is created,
- a series of lamina elements (5) placed above one another along a vertical axis (Y) in said degassing volume (V) and shaped for receiving said chemical component (2) on respective receiving surfaces (SA, SB) to distribute the chemical component (2), forming thin coats so as to promote the release of gas by said chemical component (2), said lamina elements (S_{A}, S_{B}) being shaped for advancing by gravity said chemical component (2) from one lamina element to the other below according to a path (P) with alternating corners that extends from top to bottom,
**CHARACTERIZED IN THAT** level sensor means (L1, L2, L3) is provided for controlling respectively:
- a first accumulating level of the chemical component on the bottom of said degassing column (3) for adjusting the removal flowrate of the component (2) from said bottom,
- a second accumulating level in an inlet container (11) upstream of said series of stacked lamina elements (5A, 5B), for adjusting the entry flowrate to the column (3),
- a third safety level of the quantity of chemical component (2) that accumulates on said inlet container (11),
**CHARACTERIZED IN THAT** said bounding wall (4) can be transparent to permit visual control from the exterior of the advancement status of the release of the gas in the form of bubbles and of accumulation of the chemical component (2), and **CHARACTERIZED IN THAT** said lamina elements (5) comprise pairs of opposite tapered elements (5A, 5B) obtained from sheet metal shaped plastically by rolling.

2. Apparatus according to claim 1, wherein said bounding wall (4) is of cylindrical shape, made of stainless steel, and in which at least one access zone or part of said bounding wall (4) is made of transparent glass or sapphire.

3. Apparatus according to claim 1 or 2, in which said pairs of tapered elements (5A, 5B) are arranged stacked vertically in succession to cause the formation of sequential coats that expose said chemical component (2) to the surrounding vacuum so as to promote the effective separation and removal of the gases contained therein, and in which said tapered elements (5A, 5B) are made of stainless steel.

4. Apparatus according to any one of claims 1 to 3, wherein each of said pairs of opposite tapered elements comprises
- a widening tapered element (5A) with a concavity facing downwards, shaped for receiving, into a central zone (Z_{C}) thereof, a flow of said chemical component (2) coming from an upper zone, to expand subsequently the flow to a peripheral edge (6) thereof, and
- a collecting tapered element (5B), having concavity facing upwards, shaped for receiving the coat of chemical component that falls from the widening tapered element (5A) immediately above to convey the coat of chemical component to an own central region (R_{C}).

5. Apparatus according to claim 4, wherein on said central region (R_{C}) of each collecting tapered element (5B) transit openings (7) are obtained to enable the coat to advance to an underlying pair of opposite tapered elements (5A, 5B), each collecting tapered element (5B) being provided on the perimeter with a portion of cylindrical wall (8) that projects upwards with a height that is such as to prevent the exit by overflow of the chemical component (2) collected from the periphery of the widening element 5A.

6. Apparatus according to any preceding claim, wherein in an upper inlet part (9) of said degassing column (3), there are provided a central tubular conduit (10) for delivering resin, a inlet container element (11) for entering to the stack and conveying to the centre of the stack of the underlying tapered lamina elements 5, a first hollow taper (12) and a second full taper (13) for conveying the chemical component without dripping to said inlet container (11).

7. Apparatus according to any preceding claim, wherein said degassing column (3) comprises a transparent outer safety liner (14) that is additional to said bounding wall (4).

8. Apparatus according to any preceding claim, wherein inside said degassing column (3) a shaped corrugated profile (15) is provided for preventing said chemical component (2) from forming cascades, maintaining a surface coat even in the lower part near the outlet from said degassing column (3).

9. Apparatus according to any preceding claim, wherein inside said degassing column (3) a frustoconical profile is provided with a base facing downwards, shaped for preventing said chemical component (2) from forming cascades, maintaining a surface coat even in the lower part near the outlet from said degassing column (3).

10. Apparatus according to any preceding claim, comprising a conduit (23) for the vacuum that leads away from an upper zone of said degassing column (3) and is connected to a vacuum pump (24), a gauge (25) being also provided for measuring the pressure in said degassing column (3).

11. Apparatus according to any preceding claim, comprising
- a first line (16) for removing the chemical component (2) that connects an IBC (Intermediate bulk container) tank (17) to the top of said degassing column (3), and is provided with a feed valve (18) and with a pinch flow control and shutter valve (19), of peristaltic type for adjusting the flowrate of chemical component (2) to said degassing column (3);
- a second line (20), provided with a feed pump (21) and nonreturn valve (22) located downstream, to remove chemical component (2) from the base of said degassing column (3), and send said chemical component (2) to a mixing and dosing machine (M),
- said feed pump (21) being configured for dispensing normally a flowrate that is in excess compared with what is requested by said mixing and dosing machine (M),
- a recirculating circuit (28) for the excess flowrate that leads from a first point of said second line (20) located downstream of said feed pump (21) and arrives at a second point of said second line (20) located upstream of said feed pump (21),
- along said recirculating circuit (28) a throttling valve (29) being provided for adjusting the delivery pressure of said feed pump (21), arranged for ensuring desired pressure values of the component (2) downstream of said feed pump (21).

12. Apparatus according to claim 11, comprising a bypass circuit (26) of the degasser, provided with an on-off valve (27) that leads away from said first line (16) upstream of said feed valve (18), until it joins said second line (20), in a point downstream of said feed pump (21) and of said nonreturn valve (22).

13. Apparatus according to one or more of the preceding claims, comprising a control unit (U_{C}) of PLC type operationally connected to said vacuum pump (24), to said level sensor means (L1, L2, L3), to said feed pump (21), to said shutter valve (19) to keep the flowrate balanced that is sucked by said vacuum pump (24) from said degassing volume (V) with the flowrate extracted by said pump (21) and received from said dosing and mixing machine (M).

14. Apparatus according to one or more of the preceding claims, comprising a control unit (U_{C}) of PLC type operationally connected to said vacuum pump (24), to said level sensor means (L1, L2, L3) and to the on-off valves, to said valves (18) and (27), to enable a bypass line of the degasser that leads away from said first line (16) upstream of said feed valve (18), until it joins with said second line (20), in a point downstream of said feed pump (21) and of said nonreturn valve (22).
